# EUROPÄISCHE PATENTANMELDUNG

(11) **EP 0 810 294 A1**
(43) Veröffentlichungstag der Anmeldung: **03.12.1997**
(21) Anmeldenummer: 97108087.4
(22) Anmeldetag: 17.05.1997
(51) Int. Cl.: C22C 38/18, C22C 38/00

(54) **Nichtrostender Vergütungsstahl für Ventile in Verbrennungsmotoren**

(30) Priorität: 24.05.1996 DE 19620914
(71) Anmelder: TRW Deutschland GmbH, 30890 Barsinghausen (DE)
(72) Erfinder: Berns, Hans, Prof. Dr.-Ing., 44797 Bochum (DE); Escher, Christoph, Dipl.-Ing., 44789 Bochum (DE); Streich, Wolf-Dietrich, Dipl.-Ing., 78176 Blumberg (DE)
(74) Vertreter: Arendt, Helmut, Dipl.-Ing.

(57) **Zusammenfassung**

Zur Verbesserung der Korrosion eines sticksofflegierten, nichtrostenden Vergütungsstahls für Ventile in Verbrennungskraftmaschinen wird die nachstehende Zusammensetzung in Gew.% vorgeschlagen:
N 0.3 bis 0.9
C ≤ 0.4
Si ≤ 1.5
Mn ≤ 1
P ≤ 0.025
S ≤ 0.025
Cr 12 bis 18
Mo ≤ 3
V ≤ 1
Nb+Ti ≤ 0.5,
wobei der Ansteil des Stickstoffs größer ist als der Anteil des Kohlenstoffs (Gew.% N > Gew.% C). Ein Vergütungsstahl dieser Zusammensetzung verringert nicht zur erheblich die Korrosionsgeschwindigkeit, sondern erhöht auch wesentlich die Duktilität des Stahls, wie Vergleiche ergeben haben.

## Beschreibung

Einlaßventile in Verbrennungsmotoren erreichen im Betrieb Temperaturen zwischen 450^{o}C und 550^{o}C. Sie müssen deshalb über eine entsprechende Warmfestigkeit verfügen. In längeren Betriebspausen mit Unterschreitung des Taupunkts bildet sich Kondensat, das eine Naßkorrosion der Ventile verursacht. Deshalb wird in bestimmten Fällen der für Einlaßventile normaler Beanspruchung verwendete Standardstahl X 45 CrSi 9 3 durch den nichtrostenden Stahl X 85 CrMoV 18 2 ersetzt. Ein solcher Fall liegt beispielsweise bei Einlaßventilen für Schiffsdieselmotoren vor. Hier werden die besonders aggressiven Kondensate durch Chloridionen aus der Seeluft angereichert. Es kommt zur Bildung von Korrosionsnarben, von welchen Schwingbrüche besonders dann ausgehen, wenn zur Minimierung des Ventilsitzverschleißes flache Ventilteller verwendet werden. Bekannt ist, daß Korrosionsnarben die Einleitung von Rissen begünstigen. Deshalb hat es nicht an Bemühungen gefehlt, den Korrosionswiderstand von Stählen zu erhohen. So wurde ermittelt, daß der Ersatz von Kohlenstoff durch Stickstoff in härtbaren, nichtrostenden Stählen bei vergleichbarer Härtbarkeit zu einer signifikanten Erhöhung des Korrosionswiderstandes führt. Beispielsweise beschreibt die DE 39 01 470 einen entsprechenden korrosionsbeständigen martensitischen Kaltarbeitsstahl mit 0,2 bis 0,7 Gew.% Stickstoff, der mit einer Druckfestigkeit um 3.000 MPa für Werkzeuge und Wälzlager verwendet wird. In der DE 42 12 966 wird ein warmfester, korrosionsbeständiger martensitischer Chromstahl mit 0,2 bis 1 Gew.% Stickstoff vorgestellt, der bei Raumtemperatur eine Festigkeit von mindestens 1.800 MPa und bei 500^{o}C eine Warmfestigkeit von mindestens 1.000 MPa besitzt. Ferner bezieht sich die DE 42 31 695 auf einen korrosions- und verschleißbeständigen, pulvermetallurgisch erzeugten Werkzeugstahl mit 1 bis 3,5 Gew.% Stickstoff.

Bekanntlich lassen sich durch die Herstellung über die Pulverstufe die Festigkeit und die Beständigkeit gegen Heißkorrosion verbessern. Insgesamt genügen die bekannten Vergütungsstähle den Anforderungen der Verbrennungsmotoren nicht immer in ausreichendem Maße.

Der Erfindung liegt die Aufgabe zugrunde, zur Vermeidung der eingangs genannten Schäden einen weiter verbesserten, nichtrostenden Vergütungsstahl für Ventile in Verbrennungsmotoren zu schaffen. Die Erfindung als Lösung dieser Aufgabe zeichnet sich durch die Merkmale des Anspruchs 1 aus.

Es hat sich gezeigt, daß die Korrosionsgeschwindigkeit eines nichtrostenden Vergütungsstahls der im Anspruch 1 beschriebenen Zusammensetzung ganz wesentlich verringert wird. Völlig überraschend aber ist, daß der Stickstoffanteil die Duktilität des vergüteten, nichtrostenden Ventilstahls signifikant erhöht, wie ein Vergleich mit einem bekannten Ventilstahl belegt. Die Ursache der höheren Duktilität wird darin gesehen, daß Stickstoff eine höhere Löslichkeit in härtbaren, nichtrostenden Stählen hat als Kohlenstoff. Im Stahl mit der erfindungsgemäßen Zusammensetzung werden die Nitride bei Härtetemperaturen weitgehend im Austenit gelöst, während die Karbide im bekannten Stahl zu einem Teil ungelöst zurückbleiben und in Seigerungszonen als grobe eutektische Karbide auftreten.
Ferner sind nach dem Anlassen die ausgeschiedenen Anlaßnitride feiner als die Anlaßkarbide ausgebildet. Die aufgrund der beiden genannten Ursachen erreichte geringere Größe der Nitride im Vergleich zu Karbiden verdoppelt die Duktilität des stickstofflegierten Stahles nach der Erfindung gegenüber der des bekannten kohlenstofflegierten Stahles.

Diese Aussage wird anhand des folgenden Vergleichsbeispiels gemäß Tabelle 1 belegt: Der erfindungsgemäße Ventilstahl A und der bekannte Ventilstahl B werden im vergüteten Zustand miteinander verglichen.

**Tabelle 1**

| | Stahl A | Stahl B |
|---|---|---|
| N [Gew.%] | 0.66 | 0.1 |
| C [Gew.%] | 0.01 | 0.81 |
| Si [Gew.%] | 0.85 | 0.35 |
| Mn [Gew.%] | 0.33 | 1.29 |
| P [Gew.%] | 0.002 | 0.02 |
| S [Gew.%] | 0.006 | 0.003 |
| Cr [Gew.%] | 15.9 | 17.9 |
| Mo [Gew.%] | 1.97 | 2.11 |
| V [Gew.%] | 0.12 | 0.45 |
| Härtetemperatur (°C) | 1150 | 1060 |
| Anlaßtemperatur (°C) | 660 | 760 |
| Zugfestigketi Rₘ, 20 °C (MPa) | 1220 | 1060 |

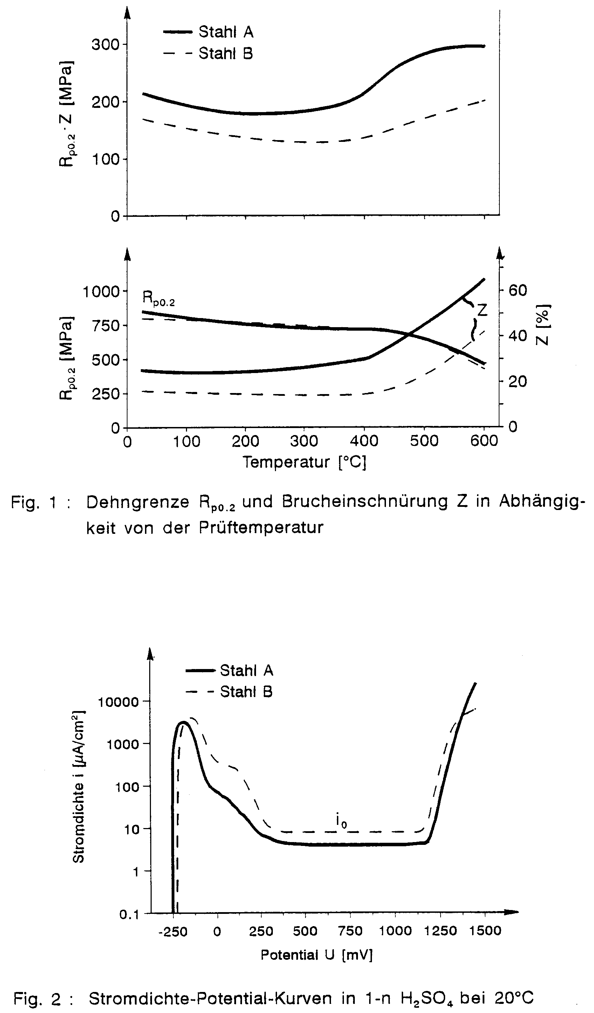

In der Figur 1 sind Ergebnisse aus Zugversuchen in Abhängigkeit von der Prüftemperatur wiedergegeben. Im betrieblichen Temperaturbereich um 500^{o}C liegt die Dehngrenze R_{p0,2} beider Stähle gleich hoch. Die Duktilität, ausgedrückt durch die Brucheinschnürung Z, ist für den Stahl A jedoch doppelt so hoch wie für den Stahl B. Das Produkt R_{p0,2}·Z fällt im gesamten Prüfbereich für den Stahl erfindungsgemäßer Zusammensetzung deutlich höher aus.

Die Korrosionsbeständigkeit der Stähle A und B ist beispielhaft für verdünnte Schwefelsäure bei Raumtemperatur der Figur 2 zu entnehmen. Es zeigt sich, daß die Passivstromdichte i₀ für den Stahl A nur halb so hoch ausfällt wie für den Stahl B, obwohl der Stahl A weniger Chrom enthält. Der Grund liegt in der geringeren Menge von chromreichen Ausscheidungen im Stahl A mit der erfindungsgemäßen Zusammensetzung. Dazu tragen der geringere Gehalt von interstitiellen Elementen und der geringere Metallanteil im Nitrid Cr₂N verglichen mit dem entsprechenden Karbid Cr₂₃C₆ im Stahl B bei.

Vergütete Ventile werden am Schaftende einer Induktionshärtung unterzogen, um den nötigen Widerstand gegen Verschleiß und Einschlagen zu gewährleisten. Die erzielbare Härte ist daher ein wichtiger Werkstoffkennwert. Die Tabelle 2 mit Härtewerten der Stähle A und B im Vergleich zeigt, daß sich nach dem Härten bei beiden Stählen die gleichen Werte einstellen. Durch Anlassen steigt jedoch die Härte des Stahls A deutlich an, während sie im Stahl B abnimmt. Am induktiv gehärteten Schaftende kann danach die Härte nach dem Anlassen bei 450^{o}C um bis zu 8 HRC zugunsten des Stahls A höher eingestellt werden.

**Tabelle 2**

| Härte (HRC) | Stahl A | Stahl B |
|---|---|---|
| induktiv gehärtet | 53 | 53 |
| angelassen 200 °C | 56 | 51 |
| angelassen 450 °C | 59 | 51 |

## Patentansprüche

1. Verwendung eines stickstofflegierten, nichtrostenden Vergütungsstahls folgender Zusammensetzung in Gew.%:
N 0.3 bis 0.9
C ≤ 0.4
Si ≤ 1.5
Mn ≤ 1
P ≤ 0.025
S ≤ 0.025
Cr 12 bis 18
Mo ≤ 3
V ≤ 1
Nb+Ti ≤ 0.5 ,
wobei der Anteil des Stickstoffs größer ist als der Anteil des Kohlenstoffs (Gew.% N > Gew.% C), als Werkstoff für Ventile in Verbrennungsmotoren.

2. Stahl zur Verwendung gemäß Anspruch 1, dadurch gekennzeichnet, daß die durch Vergüten eingestellte Zugfestigkeit bei Raumtemperatur zwischen 1.000 N/mm² und 1.500 N/mm² beträgt.

3. Ventil, hergestellt aus einem Stahl nach Anspruch 1 oder 2, dadurch gekennzeichnet, daß die Härte des Schaftendes mindestens 50 HRC beträgt.

4. Verfahren zur Einstellung der Härte eines Ventils nach Anspruch 3, dadurch gekennzeichnet, daß das Schaftende nach dem Oberflächenhärten angelassen wird.
